# EUROPÄISCHE PATENTSCHRIFT

(11) **EP 2 401 137 B1**
(45) Veröffentlichungstag und Bekanntmachung des Hinweises auf die Patenterteilung: **05.12.2012**
(21) Anmeldenummer: 10705544.4
(22) Anmeldetag: 13.02.2010
(51) Int. Cl.: B29C 70/64, B29C 70/66, B29C 47/00, B29K 71/00, B29K 79/00, B29K 81/00

(54) **EXTRUSIONSPROFIL, INSBESONDERE FÜR LUFTFAHRZEUGE, SOWIE VERFAHREN ZUR HERSTELLUNG EINES EXTRUSIONSPROFILS**
EXTRUDED PROFILE, ESPECIALLY FOR AIRCRAFT, AND METHOD FOR PRODUCING AN EXTRUDED SECTION
PROFILÉ EXTRUDÉ, EN PARTICULIER POUR AÉRONEFS, ET PROCÉDÉ DE FABRICATION D'UN PROFILÉ EXTRUDÉ

(30) Priorität: 27.02.2009 DE 102009010823
(43) Veröffentlichungstag der Anmeldung: 04.01.2012
(73) Patentinhaber: Rehau AG & Co, 95111 Rehau (DE)
(72) Erfinder: AUER, Marcel, CH-3008 Bern (CH); SONNTAG, Martin, 95028 Hof (DE); PLAUM, Michael, 95126 Schwarzenbach/Saale (DE); HERMANN, Andreas, 95111 Rehau (DE); ENGELHARDT, Dieter, 95179 Geroldsgrün (DE)
(86) Internationale Anmeldenummer: PCT/EP2010/000902
(87) Internationale Veröffentlichungsnummer: WO 2010/097169

(56) Entgegenhaltungen:
- DE-A1- 3 311 176
- DE-U1- 20 320 505
- US-A- 4 273 806
- Anonymous: "3M Performance Additives iM30K: Produkt-und Anwendungsinformationen"[Online] 2007, Seiten 1-6, XP002574184 3M Deutschland GmbH - Energy and Advanced Materials Division Gefunden im Internet: URL:http://solutions.3mdeutschland.de/3MCo ntentRetrievalAPI/BlobServlet?locale=de_DE &lmd=1184576867000&assetId=1180573926979&a ssetType=MMM_Image&blobAttribute=ImageFile > [gefunden am 2010-03-18]

## Beschreibung

Die Erfindung betrifft ein Extrusionsprofil, insbesondere für Luftfahrzeuge, enthaltend einen Basiswerkstoff aus einem Thermoplasten, vorzugsweise HT-Thermoplasten, und eine Vielzahl von Micro-Glashohlkugeln, die zwecks Gewichtseinsparung in die Polymermatrix des Basiswerkstoffs einextrudiert sind. Die Erfindung betrifft auch ein Verfahren zur Herstellung eines solchen Extrusionsprofils.

In der Luftfahrtindustrie spielt das Gewicht der eingesetzten Bauteile eine herausragende Rolle, da jegliche Gewichtseinsparung unmittelbar mit einer spürbaren Reduzierung der Treibstoffkosten verbunden ist. Man ist daher bestrebt, derartige Bauteile unter ausdrücklicher Berücksichtigung eines möglichst geringen Gewichtes zu fertigen.

In der Luft- und Raumfahrtindustrie werden aufgrund der vorliegenden Randbedingungen häufig Hochtemperatur-Thermoplaste (HT-Thermoplaste) für Kunststoffprofilanwendungen verwendet, welche zum Teil mit Glas- oder Kohlefasern verstärkt sind. Derartige Thermoplaste werden insbesondere für Innenabdeckungen im Interieurbereich von Flugzeugen verwendet.

In der DE 33 11 176 A1 werden ein Extrusionsprofil gemäß dem Oberbegriff des Anspruchs 1 und ein Verfahren gemäß dem Oberbegriff des Anspruchs 9 beschrieben. Dabei werden das Kunststoffgranulat und die Glashohlkugeln auf parallelen Fördergängen transportiert und in einem gemeinsamen Schneckengang zusammengeführt, wobei der Kunststoff dort bereits den plastischen Zustand erreicht hat. In DE 203 20 505 U1 wird ein Extruder zum Herstellen von syntaktischem Kunststoff offenbart.

Die US 4 273 806 beschreibt ein Verfahren zur Herstellung einer Kabelisolierung, bei dem dem Extruder ein Compound aus mit Microhohlkugeln gefülltem Kunststoff zugeführt wird. Die Informationsbroschüre "3M Performance Additives iM30K" beschreibt verschiedene Anwendungsbereiche von Glashohlkügelchen.

Vor dem beschriebenen Hintergrund liegt der Erfindung die Aufgabe zugrunde, ein Extrusionsprofil, insbesondere für Luftfahrzeuge, anzugeben, welches sich durch ein besonders geringes Gewicht auszeichnet.

Ausgehend von einem Extrusionsprofil mit den eingangs beschriebenen Merkmalen wird die Aufgabe erfindungsgemäß dadurch gelöst, dass der Basiswerkstoff (1) aufgrund der gemeinsamen Extrusion mit den Micro-Glashohlkugeln (2), vorzugsweise bei glatter äußerer Oberfläche (11), eine microcellulare Schaumstruktur (3) aufweist, die zu einer weiteren Gewichtseinsparung beiträgt. Die Micro-Glashohlkugeln sind sehr gleichförmig ausgebildet und werden vorzugsweise aus einem alkaliarmen Borosilikatglas gefertigt. Sie zeichnen sich durch eine chemische Inaktivität aus und verbinden niedrige Dichte mit einer hohen Druckfestigkeit. Bei dem erfindungsgemäßen Extrusionsprofil ergibt sich aufgrund der Kornverteilung ein hoher Füllgrad in der Formulierung. Die sehr hohe Aufschwimmrate erlaubt in diesem Zusammenhang eine exakte Berechnung der benötigten Füllstoff-, also Micro-Glashohlkugelmenge. Die Micro-Glashohlkugeln sind dabei nicht nur ein idealer Füllstoff zur Reduzierung der mittleren Dichte, sondern führen zusätzlich auch zu deutlichen Kostensenkungen aufgrund des geringen Preises pro Volumeneinheit. Der Basiswerkstoff weist aufgrund der gemeinsamen Extrusion mit den Micro-Glashohlkugeln eine microcellulare Schaumstruktur auf, die zu einer weiteren Gewichtseinsparung beiträgt. Durch das Expansionsverhalten der Thermoplastschmelze bei Austritt aus der Extrusionsdüse bildet die Micro-Glashohlkugel einen elliptischen Hohlraum in der Polymermatrix, welche durch die Relativbewegung der Kugel erzeugt wird. Mit Hilfe einer gezielten Temperaturführung des Abkühlvorganges der Polymerschmelze wird ein microcellularer Schaum erzeugt, dessen qualitative Strukturausbildung durch die Temperaturführung einstellbar ist. Aufgrund der Kalibriertechnik wird eine geschlossene, glatte äußere Oberfläche des Extrudates trotz darunterliegender Schaumstruktur erreicht. Durch Variation weiterer verfahrenstechnischer Parameter, wie z.B. Auslegung des Werkzeuges, Druck, Temperaturführung, Konzentration der Micro-Glashohlkugeln und hygroskopischen Materialeigenschaften, ist eine gezielte Einstellung der Schaumstruktur erreichbar. Aufgrund der Schaumstruktur wird somit zusätzlich durch die mit Hilfe der Glas-Hohlkugeln hervorgerufenen Gewichtseinsparung eine weitere Gewichtsreduzierung erzielt, ohne dass die Zugabe von chemischen und / oder physikalischen Treibmitteln / Gasen beim Extrusionsprozess notwendig ist. Vorzugsweise weist die Schaumstruktur eine mittlere Zellgröße von 20 bis 80 µm, vorzugsweise von 30 bis 60 µm auf.

Als HT-Thermoplaste kommen vorzugsweise Kunststoffe wie z.B. PEI (Polyetherimid), PPS (Polyphenylensulfid), PPSU (Polyphenylensulfon), PEEK (Polyetheretherketon) und ähnliche Materialien zum Einsatz. HT-Thermoplast meint, dass es sich hierbei um einen hochtemperaturbeständigen Kunststoff handelt, welcher für Anwendungen in einem Temperaturbereich oberhalb von ca. 150 °C geeignet ist, in dem Massen- und technische Kunststoffe aufgrund mangelnder thermischer Stabilität in ihren Eigenschaften versagen.

Die Micro-Glashohlkugeln besitzen zweckmäßigerweise einen Durchmesser von 10 bis 30 µm, vorzugsweise 15 bis 25 µm. Die Wandstärke der Glashohlkugeln bewegt sich zweckmäßigerweise in einem Bereich von 1 bis 3 µm, vorzugsweise 1,5 bis 2,5 µm. Der mittlere Abstand zwischen zwei Micro-Glashohlkugeln kann 30 bis 90 µm betragen, vorzugsweise 50 bis 70 µm.

Aufgrund des Einsatzes der Micro-Glashohlkugeln sowie der zusätzlichen Erzeugung der erwähnten Schaumstruktur im Basiswerkstoff wird erfindungsgemäß gegenüber dem entsprechenden Wert für das Vollmaterial des Basiswerkstoffes eine Reduzierung der Dichte um 5 bis 20 %, vorzugsweise 10 bis 15 % erreicht. Der Volumenanteil der Micro-Glashohlkugeln im Extrusionsprofil beträgt zweckmäßigerweise 5 bis 60 %, vorzugsweise 10 bis 60 %, insbesondere zB 20 bis 30 %. Die Gestaltung des erfindungsgemäßen Extrusionsprofils ist gegenüber einem herkömmlichen Extrusionsprozess nicht beschränkt. Insbesondere ist es möglich, das Extrusionsprofil als Hohlkammerprofil oder aber alternativ auch als Vollprofil auszubilden.

Gegenstand der Erfindung ist ferner zusätzlich ein Verfahren zur Herstellung eines Extrusionsprofils, insbesondere für Luftfahrzeuge, gemäß den Ansprüchen 9 bis 13.

Im Folgenden wird die Erfindung anhand einer lediglich ein Ausführungsbeispiel darstellenden Zeichnung ausführlich erläutert. Es zeigen schematisch:
- Fig. 1: einen Querschnitt durch ein erfindungsgemäßes Extrusionsprofil,
- Fig. 2: eine Einbausituation eines erfindungsgemäßen Extrusionsprofils in einem Flugzeug und
- Fig. 3: eine schematische Darstellung eines erfindungsgemäßen Verfahrens zur Herstellung eines Extrusionsprofils.

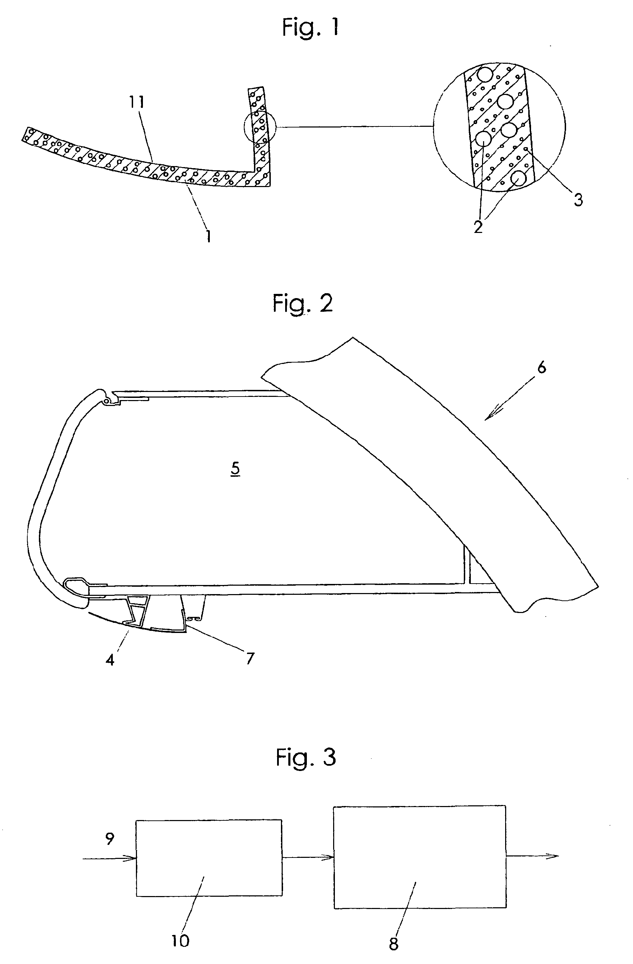

Die Fig. 1 zeigt ein Extrusionsprofil, welches als Innenabdeckung im Interieurbereich eines Flugzeuges vorgesehen ist. Das Extrusionsprofil enthält einen Basiswerkstoff 1 aus einem hochtemperaturbeständigen Thermoplasten (HT-Thermoplasten) und eine Vielzahl von Micro-Glashohlkugeln 2, die zwecks Gewichtseinsparung in den Basiswerkstoff 1 einextrudiert sind. Aufgrund der gemeinsamen Extrusion des Basiswerkstoffes 1 mit den Micro-Glashohlkugeln 2 weist das Extrusionsprofil bei glatter äußerer Oberfläche 11 eine microcellulare Schaumstruktur 3 auf, die zu einer weiteren Gewichtseinsparung beiträgt. Die Schaumstruktur 3 besitzt eine mittlere Zellgröße von 30 bis 60 µm, während die Micro-Glashohlkugeln 2 einen Durchmesser von etwa 20 µm aufweisen. Die Wandstärke der Micro-Glashohlkugeln 2 beträgt ca. 2 µm. Aufgrund der in das Extrusionsprofil eingelagerten Micro-Glashohlkugeln 2 sowie zusätzlich der Schaumstruktur 3 beträgt die mittlere Dichte des erfindungsgemäßen Extrusionsprofils einen gegenüber dem Vollmaterial des Basiswerkstoffes 1 um ca. 12 bis 18 %, vorzugsweise 14 bis 16 % reduzierten Wert. D.h., bei gleicher äußerer Gestalt ist ein erfindungsgemäßes Extrusionsprofil um ca. 15 % leichter als ein entsprechendes Profil aus einem Vollmaterial des Basiswerkstoffes 1. Der Volumenanteil der aus einem alkaliarmen Borosilikatglas bestehenden Micro-Glashohlkugeln 2 im Extrusionsprofil beträgt im Ausführungsbeispiel ca. 5 %.

Die Fig. 2 zeigt eine bevorzugte Einbausituation für ein erfindungsgemäßes Extrusionsprofil. Es kann beispielsweise als Verkleidungsprofil 4 unterhalb der Gepäckfächer 5 im Innenraum eines Flugzeuges 6 oder als Wartungsklappenprofil 7 ausgebildet sein. Neben der beschriebenen Gewichtseinsparung zeichnen sich die erfindungsgemäßen Extrusionsprofile zusätzlich durch einen geringen Preis aufgrund der durch die Micro-Glashohlkugeln 2 einerseits und die Schaumstruktur 3 andererseits bedingten Materialeinsparung aus.

Bei dem in der Figur 3 dargestellten Verfahren zur Herstellung eines Extrusionsprofils, insbesondere für Luftfahrzeuge, wird als Basiswerkstoff 1 für das Extrusionsprofil ein HT-Thermoplast verwendet und werden zur Verringerung des Gewichts des Extrusionsprofils in die Polymermatrix des Basiswerkstoffs 1 Micro-Glashohlkugeln 2 einextrudiert. Durch die Vermischung der Micro-Glashohlkugeln 2 mit dem Basiswerkstoff 1 erfolgt eine Aufschäumung des Basiswerkstoffes 1 im Extruder 8, die eine zusätzliche Gewichtseinsparung bewirkt. Zur Herstellung des erfindungsgemäßen Extrusionsprofils wird dem Extruder 8 ein Compound 9 bestehend aus Basiswerkstoff 1 und Micro-Glashohlkugeln 2 zugeführt. Vor der Zufuhr in den Extruder 8 wird das Compound 9 in einer Trocknungseinheit 10 einem Trocknungsprozess unterzogen.

Die Spannungen im fertigen Extrusionsprofil können durch beheizte Kalibrierungen (Temperatur mindestens 100 °C) reduziert werden. Vorzugsweise wird ein Temperaturbereich von 160 bis 180 °C gewählt. Durch eine kontinuierliche Inline-Temperierung kann auf einen nachträglichen, diskontinuierlichen Temperschritt verzichtet werden. Eine nachträgliche Konfektionierbarkeit der Bauteile mit bekannten Techniken wie Fräsen, Sägen etc. ist ohne Einschränkungen möglich.

Die Oberflächenenergie des Extrusionsprofils nimmt mit zunehmendem Volumenanteil der Micro-Glashohlkugeln 2 im Basiswerkstoff 1 zu und kann somit durch diese Konzentration beeinflusst werden. Dies hat vor allem auch Einfluss auf die Festigkeit von Klebeverbindungen, welche in einem nachgeschalteten Konfektionsprozess hergestellt werden.

Es besteht ferner die Möglichkeit der optischen Mattierung der Oberfläche des Extrusionsprofils durch Variation des Volumenanteils an Micro-Glashohlkugeln 2 im Basiswerkstoff 1. Dies liegt darin begründet, dass mit zunehmendem Volumenanteil der Micro-Glashohlkugeln 2 die Mikro-Rauigkeit und dadurch die Lichtstreuung in Oberflächennähe zunimmt.

## Patentansprüche

1. Extrusionsprofil, insbesondere für Luftfahrzeuge, enthaltend einen Basiswerkstoff (1) aus einem Thermoplasten, vorzugsweise HT-Thermoplasten, und eine Vielzahl von Micro-Glashohlkugeln (2), die zwecks Gewichtseinsparung in die Polymermatrix des Basiswerkstoffs (1) einextrudiert sind, **dadurch gekennzeichnet, dass** der Basiswerkstoff (1) aufgrund der gemeinsamen Extrusion mit den Micro-Glashohlkugeln (2), vorzugsweise bei glatter äußerer Oberfläche (11), eine microcellulare Schaumstruktur (3) aufweist, die zu einer weiteren Gewichtseinsparung beiträgt.

2. Extrusionsprofil nach Anspruch 1, **dadurch gekennzeichnet, dass** die Schaumstruktur (3) eine mittlere Zellgröße von 20 bis 80 µm, vorzugsweise 30 bis 60 µm, aufweist.

3. Extrusionsprofil nach einem der Ansprüche 1 bis 2, **dadurch gekennzeichnet, dass** die Micro-Glashohlkugeln (2) inen Durchmesser von 10 bis 30 µm, vorzugsweise 15 bis 25 µm, aufweisen.

4. Extrusionsprofil nach einem der Ansprüche 1 bis 3, **dadurch gekennzeichnet, dass** die Micro-Glashohlkugeln (2) eine Wandstärke von 1 bis 3 µm, vorzugsweise 1,5 bis 2,5 µm, aufweisen.

5. Extrusionsprofil nach einem der Ansprüche 1 bis 4, **dadurch gekennzeichnet, dass** die mittlere Dichte des Extrusionsprofils durch die eingelagerten Micro-Glashohlkugeln (2) und optional zusätzlich durch die Schaumstruktur (3) gegenüber dem entsprechenden Wert für Vollmaterial des Basiswerkstoffes (1) um 5 bis 20 %, vorzugsweise 10 bis 15 %, reduziert ist.

6. Extrusionsprofil nach einem der Ansprüche 1 bis 5, **dadurch gekennzeichnet, dass** der Volumenanteil der Micro-Glashohlkugeln (2) im Extrusionsprofil 5 bis 60 %, vorzugsweise 20 bis 30 % beträgt.

7. Extrusionsprofil nach einem der Ansprüche 1 bis 6, **dadurch gekennzeichnet, dass** das Extrusionsprofil als Hohlkammerprofil oder als Vollprofil ausgebildet ist.

8. Extrusionsprofil nach einem der Ansprüche 1 bis 7, **dadurch gekennzeichnet, dass** die Micro-Glashohlkugeln (2) aus alkaliarmen Borosilikatglas bestehen.

9. Verfahren zur Herstellung eines Extrusionsprofils, insbesondere für Luftfahrzeuge, wobei als Basiswerkstoff für das Extrusionsprofil ein HT-Thermoplast verwendet wird und wobei zur Verringerung des Gewichts des Extrusionsprofils in die Polymermatrix des Basiswerkstoffs Micro-Glashohlkugeln einextrudiert sind, **dadurch gekennzeichnet, dass** durch die Vermischung der Micro-Glashohlkugeln mit dem Basiswerkstoff eine Aufschäumung des Basiswerkstoffes im Extruder erfolgt, die eine zusätzliche Gewichtseinsparung bewirkt.

10. Verfahren nach Anspruch 9, **dadurch gekennzeichnet, dass** dem Extruder ein Compound bestehend aus-Basiswerkstoff und Micro-Glashohlkugeln zugeführt wird.

11. Verfahren nach Anspruch 10, **dadurch gekennzeichnet, dass** das Compound vor der Zufuhr in den Extruder einem Trocknungsprozess unterzogen wird.

12. Verfahren nach einem der Ansprüche 9 bis 11, **dadurch gekennzeichnet, dass** die Oberflächenenergie des Extrusionsprofils über den Volumenanteil der Micro-Glashohlkugeln im Basiswerkstoff eingestellt wird.

13. Verfahren nach einem der Ansprüche 9 bis 12, **dadurch gekennzeichnet, dass** über eine gezielte Einstellung des Volumenanteils der Micro-Glashohlkugeln im Basiswerkstoff eine optische Mattierung der Oberfläche des Extrusionsprofils erfolgt.

## Claims

1. Extruded profile, especially for aircraft, containing a base material (1) consisting of a thermoplastic, preferably a thermoplastic with high temperature stability, and a multiplicity of micro hollow glass beads (2) which are extruded into the polymer matrix of the base material (1) for the purpose of saving on weight, **characterized in that**, owing to being extruded together with the micro hollow glass beads (2), the base material (1), preferably with a smooth outer surface (11), has a microcellular foam structure (3) which contributes to a further saving on weight.

2. Extruded profile according to Claim 1, **characterized in that** the foam structure (3) has an average cell size of 20 to 80 µm, preferably 30 to 60 µm.

3. Extruded profile according to either of Claims 1 and 2, **characterized in that** the micro hollow glass beads (2) have a diameter of 10 to 30 µm, preferably 15 to 25 µm.

4. Extruded profile according to one of Claims 1 to 3, **characterized in that** the micro hollow glass beads (2) have a wall thickness of 1 to 3 µm, preferably 1.5 to 2.5 µm.

5. Extruded profile according to one of Claims 1 to 4, **characterized in that** the average density of the extruded profile is reduced by the embedded micro hollow glass beads (2) and optionally additionally by the foam structure (3) by 5 to 20%, preferably 10 to 15%, compared to the corresponding value for solid material of the base material (1).

6. Extruded profile according to one of Claims 1 to 5, **characterized in that** the volume fraction of the micro hollow glass beads (2) in the extruded profile is 5 to 60%, preferably 20 to 30%.

7. Extruded profile according to one Claims 1 to 6, **characterized in that** the extruded profile is designed as a hollow chamber profile or as a solid profile.

8. Extruded profile according to one of Claims 1 to 7, **characterized in that** the micro hollow glass beads (2) consist of low-alkali borosilicate glass.

9. Method for producing an extruded profile, in particular for aircraft, wherein a thermoplastic with high temperature stability is used as the base material for the extruded profile, and wherein micro hollow glass beads are extruded into the polymer matrix of the base material in order to reduce the weight of the extruded profile, **characterized in that** the mixing of the micro hollow glass beads with the base material causes foaming of the base material in the extruder, the foaming bringing about an additional saving on weight.

10. Method according to Claim 9, **characterized in that** a compound consisting of base material and micro hollow glass beads is fed to the extruder.

11. Method according to Claim 10, **characterized in that** the compound is subjected to a drying process before being fed into the extruder.

12. Method according to one of Claims 9 to 11, **characterized in that** the surface energy of the extruded profile is adjusted via the volume fraction of the micro hollow glass beads in the base material.

13. Method according to one of Claims 9 to 12, **characterized in that** the surface of the extruded profile is optically dulled via a specific adjustment of the volume fraction of the micro hollow glass beads in the base material.

## Revendications

1. Profilé extrudé, en particulier pour aéronef, contenant un matériau de base (1) constitué d'un thermoplastique, de préférence d'un thermoplastique HT, et de plusieurs microbilles creuses (2) en verre qui, pour réduire le poids, sont extrudées dans la matrice polymère du matériau de base (1), **caractérisé en ce que** le matériau de base (1) présente une structure (3) en mousse microcellulaire qui contribue à encore réduire le poids grâce à l'extrusion conjointe avec les microbilles creuses (2) de verre, la structure présentant de préférence une surface extérieure (11) lisse.

2. Profilé extrudé selon la revendication 1, **caractérisé en ce que** la structure (3) en mousse présente des cellules d'une taille moyenne de 20 à 80 µm et de préférence de 30 à 60 µm.

3. Profilé extrudé selon l'une des revendications 1 à 2, **caractérisé en ce que** les microbilles creuses (2) de verre présentent un diamètre de 10 à 30 µm et de préférence de 15 à 25 µm.

4. Profilé extrudé selon l'une des revendications 1 à 3, **caractérisé en ce que** les microbilles creuses (2) en verre présentent une paroi d'une épaisseur de 1 à 3 µm et de préférence de 1,5 à 2,5 µm.

5. Profilé extrudé selon l'une des revendications 1 à 4, **caractérisé en ce que** par rapport à la valeur correspondante du matériau de base (1) massif, la densité moyenne du profilé extrudé est réduite de 5 à 20 % et de préférence de 10 à 15 % par l'incorporation des microbilles creuses (2) en verre et facultativement encore davantage par la structure (3) en mousse.

6. Profilé extrudé selon l'une des revendications 1 à 5, **caractérisé en ce que** la fraction de volume occupé dans le profil extrudé par les microbilles creuses (2) en verre représente de 5 à 60 % et de préférence de 20 à 30 %.

7. Profilé extrudé selon l'une des revendications 1 à 6, **caractérisé en ce que** le profilé extrudé est configuré comme profilé à chambre creuse ou comme profilé plein.

8. Profilé extrudé selon l'une des revendications 1 à 7, **caractérisé en ce que** les microbilles creuses (2) en verre sont constituées de verre au borosilicate pauvre en alcalis.

9. Procédé de fabrication d'un profilé extrudé, en particulier pour aéronefs, dans lequel on utilise comme matériau de base du profilé extrudé un matériau thermoplastique HT et dans lequel des microbilles creuses de verre sont extrudées dans la matrice polymère du matériau de base pour diminuer le poids du profilé extrudé, **caractérisé en ce que** l'addition des microbilles creuses de verre dans le matériau de base entraîne dans l'extrudeuse un moussage du matériau de base qui a pour effet une réduction supplémentaire de poids.

10. Procédé selon la revendication 9, **caractérisé en ce qu'**un mélange constitué du matériau de base et de microbilles creuses de verre est apporté à l'extrudeuse.

11. Procédé selon la revendication 10, **caractérisé en ce que** le mélange subit une opération de séchage avant d'être apporté dans l'extrudeuse.

12. Procédé selon l'une des revendications 9 à 11, **caractérisé en ce que** l'énergie de surface du profilé extrudé est ajustée par l'intermédiaire de la fraction volumique occupée par les microbilles creuses de verre dans le matériau de base.

13. Procédé selon l'une des revendications 9 à 12, **caractérisé en ce que** l'ajustement contrôlé de la fraction volumique des microbilles creuses de verre dans le matériau de base a pour effet un matage optique de la surface du profilé extrudé.
